# FASCICULE DE BREVET EUROPEEN

(11) **EP 2 234 886 B1**
(45) Date de publication et mention de la délivrance du brevet: **09.10.2013**
(21) Numéro de dépôt: 08874865.2
(22) Date de dépôt: 17.10.2008
(51) Int. Cl.: B64D 33/02, F02C 7/045

(54) **NACELLE POUR TURBOREACTEUR**
GONDEL FÜR EIN TURBOJET-TRIEBWERK
NACELLE FOR TURBOJET ENGINE

(30) Priorité: 29.01.2008 FR 0800472
(43) Date de publication de la demande: 06.10.2010
(73) Titulaire: Aircelle, 76700 Gonfreville L'Orcher (FR)
(72) Inventeur: VAUCHEL, Guy, 76600 Le Havre (FR)
(74) Mandataire: Gaillarde, Frédéric F. Ch.
(86) Numéro de dépôt international: PCT/FR2008/001464
(87) Numéro de publication internationale: WO 2010/000953

(56) Documents cités:
- FR-A- 2 869 360
- FR-A- 2 898 870
- FR-A- 2 903 733

## Description

La présente invention se rapporte à une nacelle pour turboréacteur comprenant une structure d'entrée d'air apte à canaliser un flux d'air vers une soufflante du turboréacteur et une structure médiane comportant un carter destiné à entourer ladite soufflante et auquel est rattaché la structure d'entrée d'air, cette dernière présentant au moins un panneau intérieur périphérique.

Un avion est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section amont de la nacelle.

Le carter de soufflant est destiné à entourer la zone de soufflante du turboréacteur et s'arrête en amont sensiblement au niveau des aubes de soufflantes.

Toutefois, il convient de tenir compte du cas accidentel de la perte d'une aube de soufflante. Pour ce faire, le carter est généralement prolongé, par le biais d'une extension dite de rétention d'aube, jusqu'à former un angle débris d'environ 15° (généralement) par rapport à un pied d'attache de ladite aube.

Cette extension définit la position de brides d'attache entre le carter de soufflante et un panneau interne de la structure d'entrée d'air. En amont de cette interface, il n'est donc pas besoin de considérer la structure apparente d'entrée d'air comme devant être apte à retenir le débris d'aube, ce qui permet d'avoir une structure allégée.

Pour des raisons acoustiques, il est parfois nécessaire d'éviter une rupture de panneau acoustique au niveau des brides d'attaches, comme illustré dans le document FR 2 847 304, et d'étendre la surface acoustique de la virole acoustique de l'entrée d'air vers l'amont des têtes d'aubes au dessus de l'extension de rétention d'aube, comme illustré dans le document FR 2 869 360 où un panneau acoustique de l'entrée d'air s'étend jusqu'à recouvrir cette extension de rétention d'aube. Le document FR 2 898 870 décrit également une telle géométrie.

Toutefois, dans ce cas, la structure du panneau acoustique en aval des brides d'attache est en porte-à-faux et peut créer des perturbations aérodynamiques importantes (effets vibratoires, tolérances géométriques non contenues), ce qui risque de provoquer des perturbations aéroacoustiques plus importantes que le gain dû à la surface acoustique rapportée.

Par ailleurs, il est également nécessaire de prendre en compte la fourniture de brides d'attache du panneau acoustique qui, montées sur une peau externe du panneau acoustique pour des raisons de reprises d'efforts et de maintien structural, oblige à avoir une interface étendue et une épaisseur de structure suffisante pour le transit des efforts. Ceci a un impact sur la masse de l'ensemble. Ces brides d'attaches peuvent également nécessiter un complément de renforcement structural par rivets, ce qui entame la qualité de réponse acoustique des cellules impactées par le logement des bulbes desdits rivets.

Le document FR 2 903 733 décrit un ensemble propulsif comportant une nacelle comprenant une structure d'entrée d'air apte à canaliser un flux d'air vers une soufflante du turboréacteur et une structure médiane comportant un carter entourant ladite soufflante et auquel est rattaché la structure d'entrée d'air par l'intermédiaire d'au moins un panneau intérieur périphérique de ladite structure d'entrée d'air. Le carter s'étend autour de la soufflante et en amont au-delà de l'extrémité des aubes de cette dernière, la structure d'entrée d'air étant liée au carter par le panneau intérieur au moyen d'au moins une bride périphérique structurale conçue pour compléter à titre accessoire la fonction de rétention d'aube assurée par le carter de soufflante en cas de perte de cette dernière.

La présente invention vise à résoudre les inconvénients précédemment mentionnés et prévoie pour ce faire que le carter s'étend autour de la soufflante vers l'amont de la nacelle jusque au niveau d'extrémités d'aubes de cette dernière. De manière préférentielle, la bride structurale s'étend longitudinalement vers l'amont de la structure d'entrée d'air de manière à ce qu'elle s'étende sur un secteur formant un angle d'au moins 15° avec un pied de fixation des aubes de soufflante.

Ainsi, en réalisant l'élément de rétention d'aube sous la forme d'une bride de fixation appartenant à la structure d'entrée d'air, le plan d'attache entre le carter et la structure d'entrée d'air se trouve sensiblement au niveau des aubes de soufflante et n'est plus déporté vers l'amont. On évite ainsi la présence de ruptures acoustiques sur le panneau interne ainsi que tout porte-à-faux générateur de vibrations. Par ailleurs, la bride de liaison étant rallongée, on dispose d'une surface d'attache plus importante entre la bride et le panneau intérieur et donc une meilleure reprise des efforts.

On notera également que l'attache entre la structure d'entrée d'air et le carter de soufflante se fait en dehors de la zone acoustique, et que la bride est indépendante du carter de soufflante et peut donc être facilement changée seule en cas d'endommagement.

On se limitera généralement à un tel angle d'environ 15° afin de ne pas augmenter inutilement la masse de la bride et par voie de conséquence la masse de l'ensemble, mais il est bien évident que le secteur peut former un angle inférieur ou supérieur à 15° selon les caractéristiques du turboréacteur.

Avantageusement, la b r ide structurale est entièrement périphérique. Avantageusement encore, la bride structurale est continue.

Préférentiellement, le panneau intérieur est réalisé à partir d'au moins un panneau acoustique.

Selon une première variante de réalisation, le panneau intérieur de la structure d'entrée d'air recouvre entièrement la bride structurale.

Selon une deuxième variante de réalisation, le panneau intérieur de la structure d'entrée d'air recouvre partiellement la bride structurale.

Par recouvrir, on entend que le panneau interne s'étend au dessus ou au dessous de la bride sur toute la longueur ou au moins une partie de celle-ci sans être nécessairement en contact avec la bride sur tout la longueur de recouvrement.

Avantageusement, le carter possède une paroi intérieure s'étendant au moins partiellement au dessous de la bride structurale.

Avantageusement encore, le carter présente un prolongement s'étendant au moins partiellement au dessous de la bride structurale de manière à recouvrir des moyens de liaison entre la bride et le panneau intérieur de la structure d'entrée d'air.

La mise en oeuvre de l'invention sera mieux comprise à l'aide de la description détaillée qui est exposée ci-dessous en regard du dessin annexé.
La figure 1 est une vue schématique en coupe longitudinale d'une nacelle selon l'art antérieur.
La figure 2 est une vue agrandie partielle du carter de la nacelle de la figure 1.
La figure 3 est une représentation schématique agrandie de la jonction entre le carter et le panneau intérieur de la structure d'entrée d'air selon l'art antérieur.
La figure 4 est une représentation schématique agrandie de la jonction entre le carter et le panneau intérieur selon la présente invention.
La figure 5 est représentation agrandie de la figure 4.
La figure 6 est une représentation schématique d'une première variante de réalisation de l'invention.
La figure 7 est une représentation schématique d'une deuxième variante de réalisation de l'invention.
La figure 8 est une représentation schématique d'une troisième variante de réalisation de l'invention.
La figure 9 est une représentation schématique d'une quatrième variante de réalisation de l'invention.

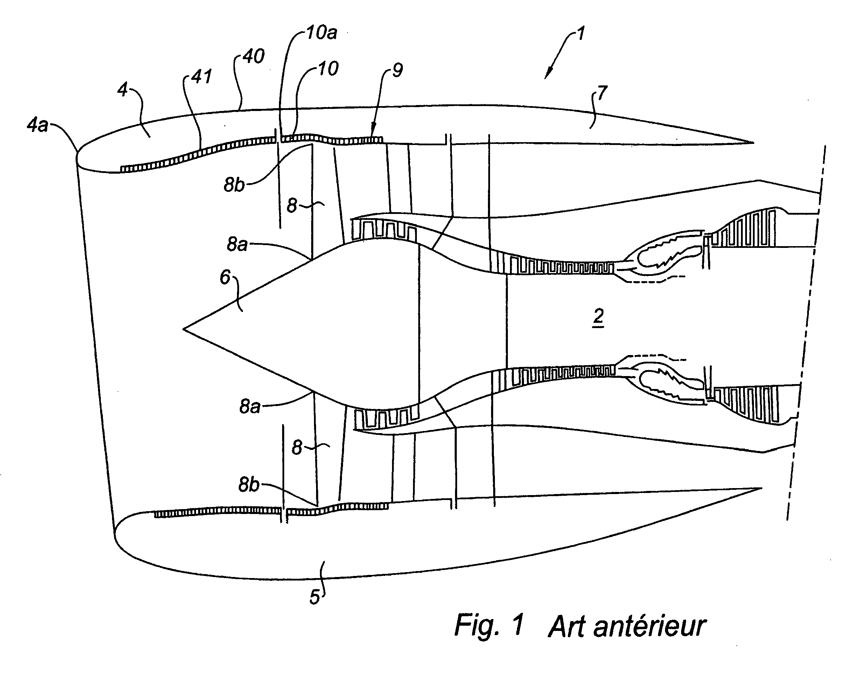

La figure 1 représente très schématiquement une nacelle 1 constituant un logement tubulaire pour un turboréacteur 2 double flux de conception classique dont elle sert à canaliser les flux d'air qu'il génère en définissant des lignes aérodynamiques internes et externes nécessaires à l'obtention de performances optimales. Elle abrite également différents composants nécessaires au fonctionnement du turboréacteur 2 ainsi que des systèmes annexes tels qu'un inverseur de poussée.

A partir de son extrémité amont, le turboréacteur 2 comporte de façon connue un compresseur, une chambre de combustion et une turbine basse pression qui entraîne à son tour une soufflante 6 placée à l'avant du turboréacteur 2.

La soufflante 6 porte un ensemble d'aubes 8 pénétrant dans un canal annulaire appelé « canal de soufflante » délimité entre une enveloppe externe du turboréacteur et une enveloppe intérieure de la nacelle 1.

La nacelle 1 possède une structure comprenant une section avant formant une entrée d'air 4, une section médiane 5 entourant la soufflante 6 et ses aubes 8, et une section arrière 7 entourant le turboréacteur 2 et abritant un système d'inversion de poussée (non visible).

L'entrée d'air 4 présente une partie avant 4a formant une lèvre 4a d'entrée d'air adaptée pour permettre la captation optimale vers le turboréacteur 2 de l'air nécessaire à l'alimentation de la soufflante 6 et des compresseurs internes du turboréacteur 2, et d'autre part, une structure aval sur laquelle est rapportée la lèvre 4a, comprenant un panneau externe 40 et un panneau interne 41 acoustique, et destinée à canaliser convenablement l'air vers les aubes 8 de la soufflante 6.

L'ensemble est rattaché en amont d'un carter 9 de la soufflante 6 appartenant à la section médiane 5 de la nacelle 1 par le biais du panneau interne 41.

Selon l'art antérieur et tel que représenté sur les figures 1 à 3, le carter 9 possède une fonction de rétention d'aube en cas de perte d'une des aubes de soufflante et possède pour ce faire un prolongement 10 s'étendant vers l'amont au delà des aubes 8 de soufflante 6 de manière à ce que l'angle formé depuis un pied de fixation 8a d'une aube entre une extrémité 8b d'aube 8 et une extrémité 10a dudit prolongement 10 soit d'environ 15°.

La liaison entre l'entrée d'air 4 et le carter de soufflante 9 s'effectue par la mise en place d'une ou plusieurs brides 12 de liaison entre ledit prolongement 10 et le panneau interne 41.

Afin d'optimiser les performances d'atténuation acoustique, le prolongement 10 de rétention d'aube du carter 9 peut présenter un léger décrochement permettant d'étendre le panneau acoustique 41 de la structure d'entrée d'air 4 jusqu'au niveau des aubes 8 de soufflante 6 en recouvrant ledit prolongement 10. Toutefois, une telle solution présente des inconvénients qui ont été exposés précédemment.

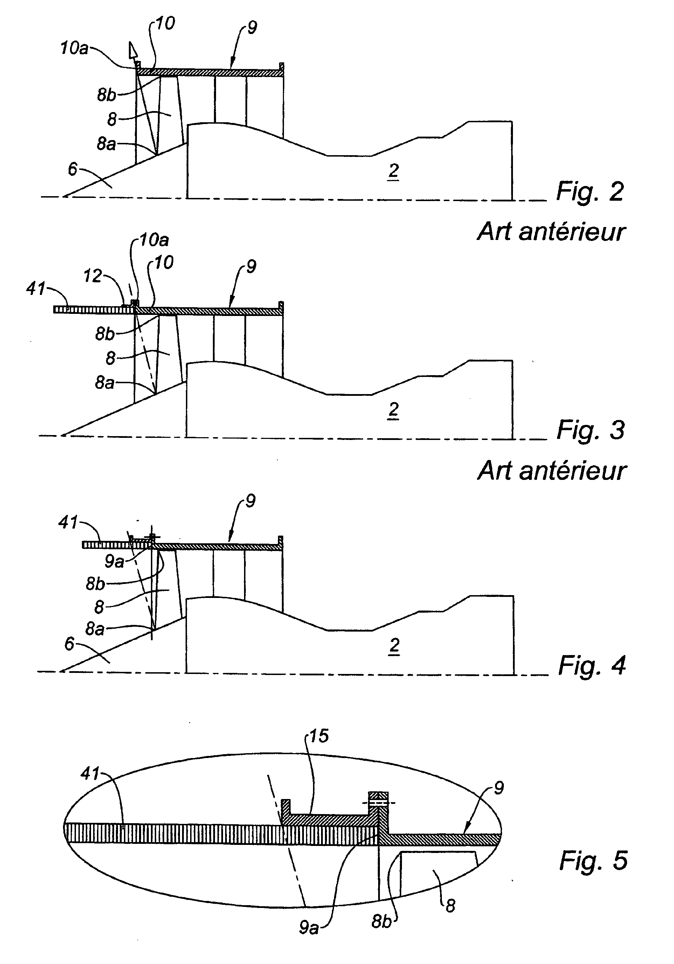

Selon l'invention, et tel que cela est représenté sur les figures 4 à 9, le carter 9 de soufflante 6 n'intègre plus de prolongement de rétention d'aube et est limité, en amont de la nacelle, sensiblement au niveau des aubes de soufflante.

De ce fait, le carter 9 ne s'étend plus sensiblement en amont de la nacelle 1 qu'au niveau des extrémités 8b des aubes 8 de soufflante 6 et est lié par une extrémité 9a au panneau interne 41 par l'intermédiaire d'une bride 15 apte à assurer la rétention d'une aube 8 de soufflante 6 en cas de perte de cette dernière.

Une telle disposition est schématiquement représentée sur les figures 5 à 9.

Avantageusement, la bride 15 s'étend longitudinalement vers l'amont de la structure d'entrée d'air de manière à ce que ses deux extrémités forment un angle d'environ 15° avec un pied de fixation 8a des aubes 8 de soufflante 6.

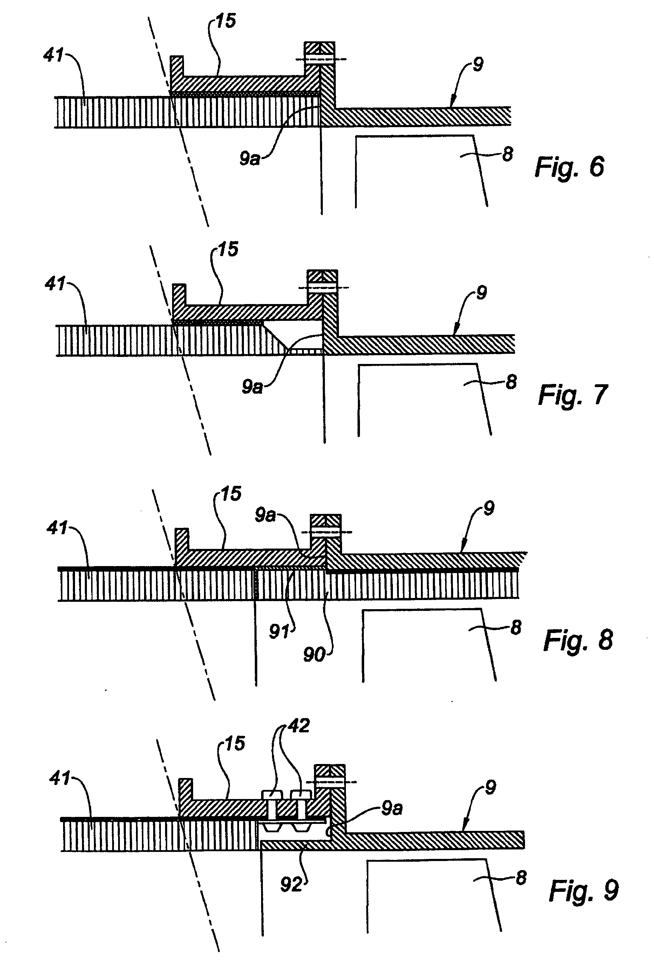

Comme représenté sur la figure 7, le panneau intérieur 41 acoustique peut ne recouvrir que partiellement la bride 15. Le panneau intérieur 41 présente alors une extrémité monolithique. Ceci est avantageux en cas de nécessité de renforcement structural du panneau intérieur 41 lui-même. Le recouvrement restant de la bride 15 sur ledit panneau intérieur 41 est suffisant pour ne pas nécessiter un ajout de surface de contact supplémentaire, ce qui préserve la masse de l'ensemble.

Comme représenté sur la figure 8, le recouvrement de la bride 15 peut être partiel par le panneau intérieur 41 et compléter par un panneau 90 qui peut être abradable et équipe le carter 9 qui se prolonge en amont de l'extrémité 9a du carter partiellement au dessous de la bride 15. Un prolongement 91 du carter 9 au dessous de la bride 15 peut servir d'interface entre le panneau 90 et la bride 15.

Comme représenté sur la figure 9, la longueur de la bride 15 permet d'assurer un recouvrement suffisant du panneau intérieur 41 et autorise un montage de la bride 15 sur ledit panneau intérieur 41 au moyen de fixation 42 situées dans une zone aval monolithique du panneau intérieur 41. L'extrémité amont 9a du carter 9 présente un prolongement 92 non structural apte à recouvrir l'aval de la bride 15 et à assurer une continuité aérodynamique avec le panneau intérieur 41.

Bien évidemment, d'autres configurations peuvent être envisagées. Notamment les moyens de fixation 42 peuvent être disposés en amont (figure 9) ou en aval (non représenté) du plan de jonction de la bride 15 avec le carter 9 ou encore pourra suivre une forme particulière du panneau intérieur 41 et n'être pas nécessairement rectiligne selon la direction axiale de la nacelle.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Ensemble propulsif comportant une nacelle (1) abritant un turboréacteur, ledit ensemble propulsif comprenant une structure d'entrée d'air (4) apte à canaliser un flux d'air vers une soufflante (6) du turboréacteur et une structure médiane (5) comportant un carter (9) entourant ladite soufflante et auquel est rattaché la structure d'entrée d'air par l'intermédiaire d'au moins un panneau intérieur (41) périphérique de ladite structure d'entrée d'air, **caractérisée en ce que** le carter s'étend autour de la soufflante vers l'amont de la nacelle jusqu'au niveau d'extrémités d'aubes (8) de cette dernière, la structure d'entrée d'air étant liée au carter par le panneau intérieur au moyen d'au moins une bride (15) périphérique structurale appartenant à la structure d'entrée d'air et conçue pour assurer une rétention d'au moins une aube en cas de perte de cette dernière.

2. Ensemble propulsif selon la revendication 1, **caractérisée en ce que** la bride (15) structurale s'étend longitudinalement vers l'amont de la structure d'entrée d'air (4) de manière à ce à ce qu'elle s'étende sur un secteur formant un angle d'au moins 15° avec un pied de fixation (8a) des aubes (8) de soufflante (6).

3. Ensemble propulsif selon l'une quelconque des revendications 1 ou 2, **caractérisée en ce que** la bride (15) structurale est entièrement périphérique.

4. Ensemble propulsif selon la revendication 3, **caractérisée en ce que** la bride (15) structurale est continue.

5. Ensemble propulsif selon l'une quelconque des revendications 1 à 4, **caractérisée en ce que** le panneau intérieur (41) est réalisé à partir d'au moins un panneau acoustique.

6. Ensemble propulsif selon l'une quelconque des revendications 1 à 5, **caractérisée en ce que** le panneau intérieur (41) de la structure d'entrée d'air (4) recouvre entièrement la bride (15) structurale.

7. Ensemble propulsif selon la revendication 5, **caractérisée en ce que** le panneau acoustique (41) de la structure d'entrée d'air (4) recouvre partiellement la bride (45) structurale.

8. Ensemble propulsif selon la revendication 7, **caractérisée en ce que** le carter (9) possède une paroi intérieure (90) s'étendant au moins partiellement au dessous de la bride (15) structurale.

9. Ensemble propulsif selon la revendication 7, **caractérisée en ce que** le carter (9) présente un prolongement (92) s'étendant au moins partiellement au dessus de la bride (15) structurale de manière à recouvrir des moyens de liaison (42) entre la bride et le panneau intérieur (41) de la structure d'entrée d'air (4).

## Patentansprüche

1. Antriebsgruppe, die eine Gondel (1) aufweist, die ein Turbotriebwerk aufnimmt, wobei die Antriebsgruppe eine Lufteingangsstruktur (4) umfasst, die imstande ist, einen Luftstrom zu einem Gebläse (6) des Turbotriebwerks zu kanalisieren, und eine mittlere Struktur (5), die ein Gehäuse (9) aufweist, das das Gebläse umgibt und mit dem die Lufteingangsstruktur über mindestens eine periphere innere Platte (41) der Lufteingangsstruktur verbunden ist, **dadurch gekennzeichnet, dass** sich das Gehäuse um das Gebläse in die stromaufwärtige Richtung der Gondel bis zur Ebene von Enden von Schaufeln (8) derselben erstreckt, wobei die Lufteingangsstruktur mit dem Gehäuse durch die innere Platte mit Hilfe mindestens eines peripheren Strukturflanschs (15) verbunden ist, der zur Lufteingangsstruktur gehört und ausgebildet ist, um einen Rückhalt mindestens einer Schaufel bei einem Verlust derselben sicherzustellen.

2. Antriebsgruppe nach Anspruch 1, **dadurch gekennzeichnet, dass** sich der Strukturflansch (15) längs in die stromaufwärtige Richtung der Lufteingangsstruktur (4) derart erstreckt, dass er sich über einen Sektor erstreckt, der einen Winkel von mindestens 15° mit einem Befestigungsfuß (8a) der Schaufeln (8) des Gebläses (6) bildet.

3. Antriebsgruppe nach einem der Ansprüche 1 oder 2, **dadurch gekennzeichnet, dass** der Strukturflansch (15) vollkommen peripher ist.

4. Antriebsgruppe nach Anspruch 3, **dadurch gekennzeichnet, dass** der Strukturflansch (15) durchgehend ist.

5. Antriebsgruppe nach einem der Ansprüche 1 bis 4, **dadurch gekennzeichnet, dass** die innere Platte (41) aus mindestens einer Akustikplatte hergestellt ist.

6. Antriebsgruppe nach einem der Ansprüche 1 bis 5, **dadurch gekennzeichnet, dass** die innere Platte (41) der Lufteingangsstruktur (4) den Strukturflansch (15) vollkommen bedeckt.

7. Antriebsgruppe nach Anspruch 5, **dadurch gekennzeichnet, dass** die Akustikplatte (41) der Lufteingangsstruktur (4) den Strukturflansch (45) teilweise bedeckt.

8. Antriebsgruppe nach Anspruch 7, **dadurch gekennzeichnet, dass** das Gehäuse (9) eine Innenwand (90) besitzt, die sich mindestens teilweise unter dem Strukturflansch (15) erstreckt.

9. Antriebsgruppe nach Anspruch 7, **dadurch gekennzeichnet, dass** das Gehäuse (9) eine Verlängerung (92) aufweist, die sich mindestens teilweise derart über dem Strukturflansch (15) erstreckt, dass Verbindungsmittel (42) zwischen dem Flansch und der inneren Platte (41) der Lufteingangsstruktur (4) bedeckt werden.

## Claims

1. A propulsion assembly including a nacelle (1) housing a turbojet engine, said propulsion assembly comprising an air intake structure (4) capable of channeling an air flow toward a fan (6) of the turbojet engine and a middle structure (5) including a casing (9) surrounding said fan and to which the air intake structure is attached by means of at least one peripheral inner panel (41) of said air intake structure, **characterized in that** the casing extends around the fan toward the upstream direction of the nacelle up to blade end (8) thereof, the air intake structure being connected to the casing by the inner panel using at least one structural peripheral flange (15) belonging to the air intake structure and designed to ensure retention of at least one blade in the event of loss thereof.

2. The propulsion assembly according to claim 1, **characterized in that** the structural flange (15) extends longitudinally toward the upstream direction of the air intake structure (4) such that it extends over a sector forming an angle of at least 15° with the fastening foot (8a) of the blades (8) of the fan (6).

3. The propulsion assembly according to any one of claims 1 or 2, **characterized in that** the structural flange (15) is completely peripheral.

4. The propulsion assembly according to claim 3, **characterized in that** the structural flange (15) is continuous.

5. The propulsion assembly according to any one of claims 1 to 4, **characterized in that** the inner panel (41) is made from at least one acoustic panel.

6. The propulsion assembly according to any one of claims 1 to 5, **characterized in that** the inner panel (41) of the air intake structure (4) completely covers the structural flange (15).

7. The propulsion assembly according to claim 5, **characterized in that** the acoustic panel (41) of the air intake structure (4) partially covers the structural flange (45).

8. The propulsion assembly according to claim 7, **characterized in that** the casing (9) has an inner wall (90) extending at least partially below the structural flange (15).

9. The propulsion assembly according to claim 7, **characterized in that** the casing (9) has an extension (92) extending at least partially above the structural flange (15) so as to cover linking means (42) between the flange and the inner panel (41) of the air intake structure (4).
